# EUROPÄISCHE PATENTSCHRIFT

(11) **EP 0 492 412 B1**
(45) Veröffentlichungstag und Bekanntmachung des Hinweises auf die Patenterteilung: **08.03.1995**
(21) Anmeldenummer: 91121734.7
(22) Anmeldetag: 18.12.1991
(51) Int. Cl.: B01F 13/00

(54) **Dynamischer Mischer**
Dynamic mixer
Mélangeur dynamique

(30) Priorität: 21.12.1990 DE 9017323 U
(43) Veröffentlichungstag der Anmeldung: 01.07.1992
(73) Patentinhaber: THERA Patent GmbH & Co. KG Gesellschaft für industrielle Schutzrechte, D-82229 Seefeld (DE)
(72) Erfinder: Herold, Wolf Dietrich, Dr., W-8031 Seefeld 2 (DE); Brandhorst, Gerd, W-8000 München 71 (DE); Rehfeld, Günter, W-8918 Diessen (DE)
(74) Vertreter: Strehl Schübel-Hopf Groening & Partner

(56) Entgegenhaltungen:
- EP-A- 0 150 738
- EP-A- 0 302 819
- EP-A- 0 388 185
- CH-A- 674 717
- FR-A- 2 399 861
- US-A- 3 767 085

## Beschreibung

Ein dynamischer Mischer mit den im ersten Teil des Anspruchs 1 angegebenen Merkmalen ist aus US-A-3 767 085 bekannt. Die Zuführung der beiden zu vermischenden Materialstränge erfolgt dort über einen am hinteren Ende der Mischerkammer vorgesehenen konischen Abschlußkörper, an dessen Außenfläche Kanäle vorgesehen sind, die hintere Rohrzapfen mit der Mischerkammer verbinden. Bei einer derartigen Zuführung treten an dem Abschlußstück erhebliche Reibungsverluste auf, die eine entsprechend robuste Gestaltung der Fördervorrichtung zum Auspressen der die Materialkomponenten enthaltenden Kartuschen erfordert.

Eine ähnliche Schwierigkeit besteht bei dem Mischer nach CH-A-674 717. Auch dort treten wegen langer Zuführleitungen im Transport der Materialstränge zum eigentlichen Mischer hohe Reibungskräfte auf.

Bei einem weiteren, aus DE-A-3 635 635 bekannten dynamischen Mischer ist das Gehäuse nach hinten offen und mit einem Bajonettverschluß an ein Halteteil angeschlossen. In diesem Fall besteht beim Wechsel des Mischers die Gefahr einer Verschleppung der Komponenten, insbesondere wenn es sich um fadenziehende Substanzen handelt. Dies kann zu einer Materialaushärtung in einem nicht mit dem Mischer auswechselbaren Geräteteil führen.

Der aus DE-A-3 635 635 bekannte Mischer weist ferner einen Abstreifer auf, der über die der Mischerkammer zugewandte Fläche des Halteteils läuft und die zugeführten Komponentenstränge zerteilen soll. Diese Wirkung wird jedoch mangels fester Zuordnung zwischen dem Mischerelement mit dem Abstreifer einerseits und dem Halteteil andererseits nur bedingt erreicht.

Der Erfindung liegt die Aufgabe zugrunde, einen dynamischen Mischer anzugeben, der bei möglichst geringen Reibungsverlusten bei der Komponentenzufuhr ein einfaches Auswechseln ohne die Gefahr einer Verschleppung der Materialien gestattet.

Die erfindungsgemäße Lösung dieser Aufgabe ist im Anspruch 1 gekennzeichnet. Die danach den Kammerteil des Mischergehäuses am hinteren Ende begrenzende Abschlußplatte läßt sich mit ihren nach hinten ragenden Rohrzapfen unmittelbar in entsprechende Austrittsöffnungen der die Komponenten enthaltenden Kartuschen einführen, so daß der Förderweg von der Kartusche zum Mischerelement auf ein Minimum reduziert ist. Daraus ergeben sich minimale Reibungsverluste.

Gleichzeitig stellt sich der Mischer als geschlossenes Bauteil mit eindeutig voneinander getrennten Komponenten-Einführungen dar, das sich von den Kartuschen ohne Verschleppungsgefahr der Komponenten sauber abnehmen und durch einen neuen Mischer ersetzen läßt. Bei chemisch miteinander reagierenden Komponenten, etwa dentalen Abdruckmassen oder Klebstoffen, ist nämlich ein Auswechseln des Mischers nach jeder längeren Unterbrechung des Misch- und Ausbringvorgangs erforderlich, weil die Masse zwischenzeitlich im Mischer aushärtet und diesen unbrauchbar macht.

Der erfindungsgemäß vorgesehene Abstreifer, der mit einer in Drehrichtung nach vorne weisenden Schneidkante die vordere Fläche der Abschlußplatte überstreicht und eine sich an die Schneidkante anschließende, in Ausbringrichtung ansteigende Schrägfläche aufweist, bewirkt ein sofortiges Abstreifen und Zerschneiden der Komponentenstränge, so daß praktisch in jedem beliebigen Moment eine saubere Unterbrechung der Komponentenstränge gewährleistet ist.

Die in Anspruch 2 angegebene Ausgestaltung bedeutet, daß der in dem hinteren konischen Bereich des Kammerteils laufende Abstreifer mit seiner in Ausbringrichtung ansteigenden Schrägfläche den Transport der Gemischkomponenten in Ausbringrichtung unterstützt.

Die Weiterbildung der Erfindung nach Anspruch 3 ist insofern von Vorteil, als die konisch geformten Außenflächen der Rohrzapfen eine wirksame Abdichtung gegenüber den Austrittsöffnungen der Kartuschen ergeben.

Die Maßnahme des Anspruchs 4 ist im Hinblick auf die Einfachheit der Herstellung und des Zusammenbaus des Mischers von Vorteil. Dieses Merkmal ist von Bedeutung, weil der Mischer ein möglichst billiges Wegwerfteil sein soll.

Die Weiterbildung der Erfindung nach Anspruch 5 ist insofern günstig, als die dort angegebene Art der Befestigung des Mischers an den Kartuschen gleichzeitig den Druck zum Dichten der Rohrzapfen gegenüber den Austrittsöffnungen der Kartuschen sowie der Abschlußplatte gegenüber dem Gehäuse-Kammerteil sicherstellt.

Ein Ausführungsbeispiel der Erfindung wird nachstehend anhand der Zeichnung näher erläutert; darin zeigt
Figur 1 einen Axialschnitt durch einen Mischer, und
Figur 2 eine Seitenansicht auf eine Kartuscheneinheit mit angeschlossenem Mischer nach Figur 1.

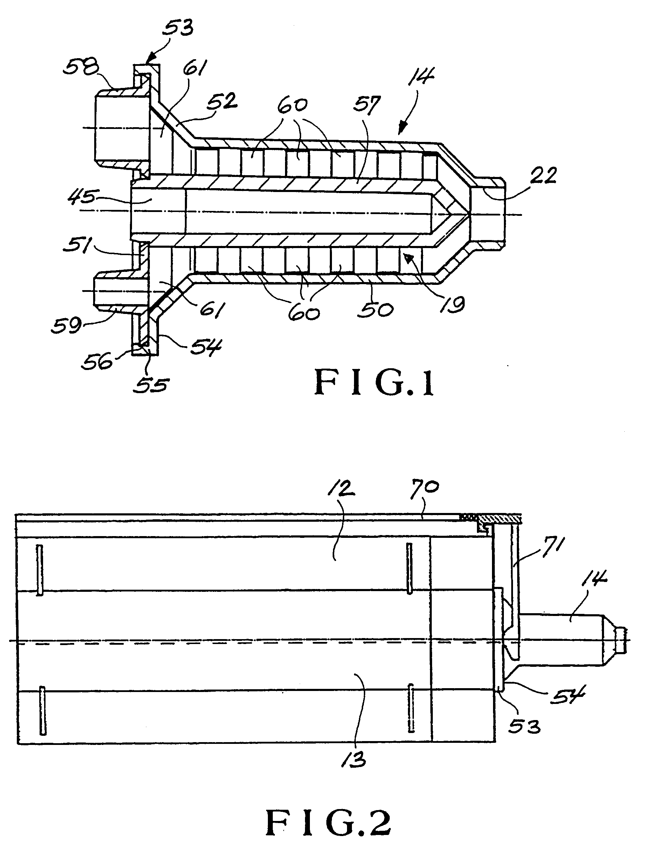

Der in Figur 1 insgesamt mit 14 bezeichnete Mischer besteht aus drei Kunststoff-Spritzteilen, nämlich einem in seinem Hauptteil zylindrischen Gehäuse-Kammerteil 50 mit einer vorderen Ausbringöffnung 22, einer die Gehäuserückwand bildenden Abschlußplatte 51 und einem in dem Gehäuse um dessen Längsachse drehbar gelagerten Mischerelement 19.

Der Kammerteil 50 geht an seinem von der Ausbringöffnung 22 abgewandten hinteren Ende in einen sich nach hinten erweiternden konischen Bereich 52 über, der in einem radial nach außen ragenden Flanschteil 53 endet. Der Flanschteil 53 bildet eine nach vorne (d.h. in Richtung der Ausbringöffnung 22) weisende Fläche 54 und ist im Innern seines zylindrischen Abschnitts 55 mit einer Radialnut 56 versehen.

Die Abschlußplatte 51 ist so dimensioniert, daß sie sich von hinten her in den Flanschteil 53 einsetzen und unter elastischer Verformung des Gehäusematerials in die Radialnut 56 einschnappen läßt. Dadurch wird eine Dichtwirkung zwischen dem Kammerteil 50 und der Abschlußplatte 51 erreicht.

Die Abschlußplatte 51 ist ferner mit einer zentrischen Bohrung versehen, in der der hohle Kern 57 des Mischerelements 19 drehbar gelagert ist. Das Ende des Kerns 57 durchsetzt die Abschlußplatte 51 und ist mit einer sechskantigen Ausnehmung 45 zum Eingriff des komplementär geformten Endes einer (nicht dargestellten) Antriebswelle versehen.

Exzentrisch zu der mittleren Bohrung sind an die Abschlußplatte 51 zwei nach hinten ragende Rohrzapfen 58, 59 angeformt, die unmittelbar in Austrittsöffnungen von (in Figur 2 gezeigten) Kartuschen 12, 13 einführbar sind, die die miteinander zu mischenden Komponenten enthalten. Um zwischen den Rohrzapfen 58, 59 und den Austrittsöffnungen der Kartuschen 12, 13 eine Dichtwirkung zu erreichen, verjüngen sich die Außenflächen der Rohrzapfen 58, 59 nach hinten konisch.

Der innere Querschnitt der Rohrzapfen 58, 59 ist in Figur 1 unterschiedlich groß dargestellt und entspricht somit beispielsweise einem Fall, bei dem die beiden Komponenten in einem von 1:1 verschiedenen Verhältnis gemischt werden.

Das Mischerelement 19 trägt eine Gruppe von an der Außenfläche des Kerns 57 angeformten Mischerflügeln 60, die innerhalb des zylindrischen Bereichs des Gehäuse-Kammerteils 50 angeordnet sind und bis an die innere Kammerwand reichen. Am hinteren Ende sind an den Kern 57 ferner mehrere Abstreiferarme 61 angeformt, deren jeder mit einer in Drehrichtung nach vorne weisenden Schneidkante versehen ist. Von den Schneidkanten ausgehend bilden die Abstreiferarme 61 schräg nach vorne ansteigende Flächen, die den Transport der Komponenten in Ausbringrichtung unterstützen.

Die genannten Schneidkanten streichen über die Innenfläche der Abschlußplatte 51 und dienen dazu, die über die Rohrzapfen 58, 59 zugeführten Komponentenstränge zu zerteilen. Das sofortige Abstreifen und Zerschneiden der Komponentenstränge ist insofern günstig, als beim Abnehmen des Mischers 14 von den Kartuschen 12, 13 in praktisch jedem beliebigen Moment eine saubere Unterbrechung der Komponentenstränge gewährleistet ist.

Figur 2 zeigt den Mischer 14 in der Stellung, in der er am vorderen Ende einer zwei Kartuschen 12 und 13 umfassenden Kartuscheneinheit befestigt ist. Die Befestigung erfolgt durch einen Deckel 70 der Kartuscheneinheit, der an seinem vorderen Ende ein gabelartiges Halteelement 71 trägt.

Die beiden Arme des Halteelements 71 drücken in der in Figur 2 veranschaulichten geschlossenen Stellung des Deckels auf die vordere Fläche 54 des Flanschteils 53 des Mischers 14 an zwei diametral gegenüber liegenden Stellen und bewirken eine federnde Vorspannung des Mischers 14 in Richtung der Kartuschen 12, 13. Dadurch werden die konischen Rohrzapfen 58, 59 dichtend in die (nicht gezeigten) Austrittsöffnungen der Kartuschen gedrückt und gleichzeitig die Abschlußplatte 51 dichtend gegen die innere Fläche des Flanschteils 53 gepreßt.

## Patentansprüche

1. Dynamischer Mischer, umfassend
ein Gehäuse mit einem im wesentlichen zylindrischen Kammerteil (50), der an seinem vorderen Ende eine Ausbringöffnung (22) für das Gemisch aufweist,
einen am hinteren Ende des Kammerteils (50) vorgesehenen Abschlußkörper (51) mit nach hinten herausragenden Rohrzapfen (58, 59) zum unmittelbaren Einführen in Austrittsöffnungen von die zu mischenden Komponenten enthaltenden Vorratsbehältern (12, 13), und
ein in dem Kammerteil (50) um dessen Längsachse drehbares Mischerelement (19), das mit seinem hinteren Ende in einer Bohrung des Abschlußkörpers (51) drehbar gelagert ist,
dadurch **gekennzeichnet**,
daß der Abschlußkörper als Platte (51) ausgebildet ist,
daß das Mischerelement (19) mindestens einen Abstreifer (61) trägt, der mit einer in Drehrichtung nach vorne weisenden Schneidkante die vordere Fläche der Abschlußplatte (51) überstreicht, und
daß sich an die Schneidkante eine in Ausbringrichtung ansteigende Schrägfläche anschließt.

2. Mischer nach Anspruch 1, wobei der die Schrägfläche bildende Abstreifer (61) innerhalb eines sich nach hinten erweiternden konischen Bereichs (52) des Kammerteils (50) läuft.

3. Mischer nach Anspruch 1 oder 2, wobei die Außenflächen der Rohrzapfen (58, 59) nach hinten verjüngend konisch geformt sind.

4. Mischer nach einem der Ansprüche 1 bis 3, wobei die Abschlußplatte (51) von hinten her in einen radialen Flanschteil (53) des Kammerteils (50) einsetzbar ist.

5. Mischer nach Anspruch 4, wobei der Flanschteil (53) eine nach vorne ragende Fläche (54) zum Eingriff mit einem den Mischer (14) mit Vorratsbehältern (12, 13) verbindenden Halteelement (71) bildet.

## Claims

1. A dynamic mixer comprising
a housing including a substantially cylindrical chamber portion (50) having at its front end a discharge opening (22) for the mixture,
a terminating body (51) provided at the rear end of the chamber portion (50) and including rearwardly projecting pipe sockets (58, 59) for being directly inserted into output openings of supply containers (12, 13) containing the components to the mixed, and
a mixer element (19) which is rotatable within the chamber portion (50) about the longitudinal axis thereof and has its rear end rotatably supported in a bore of the terminating body (51),
characterised in
that the terminating body is formed as a plate (51),
that the mixer element (19) carries at least one wiper (61) having a cutting edge which projects forwardly in the direction of rotation and wipes the front surface of the terminating plate (51), and
that the cutting edge is continued by an inclined surface which rises in the dispensing direction.

2. The mixer of claim 1, wherein the wiper (61) which forms the inclined surface runs within a rearwardly enlarging conical part (52) of the chamber portion (50).

3. The mixer of claim 1 or 2, wherein the outer surfaces of the pipe sockets (58, 59) are shaped conically in a rearwardly tapering manner.

4. The mixer of any one of claims 1 to 3, wherein the terminating plate (51) is adapted to be inserted into a radial flange portion (53) of the chamber portion (50) from the rear end thereof.

5. The mixer of claim 4, wherein the flange portion (53) forms a forwardly projecting surface (54) for engagement with a retaining element (71) which connects the mixer (14) with the supply containers (12, 13).

## Revendications

1. Mélangeur dynamique, comprenant un carter avec une partie de chambre (50) de forme sensiblement cylindrique dont l'extrémité antérieure est pourvue d'une ouverture de distribution (22) pour le mélange, un corps de fermeture (51) prévu à l'extrémité postérieure de la partie de chambre (50), avec des tourillons tubulaires (58, 59) pour l'introduction directe dans des ouvertures de sortie de réservoirs de stockage (12, 13) contenant les constituants à mélanger, et un élément mélangeur (19) qui peut tourner dans la partie de chambre (50) autour de l'axe longitudinal de celle-ci et dont l'extrémité postérieure est montée de manière tournante dans un alésage du corps de fermeture (51), caractérisé en ce que le corps de fermeture est réalisé sous la forme d'une plaque (51), que l'élément mélangeur (19) porte au moins un racleur (61) lequel passe avec une arête de coupe orientée vers l'avant dans la direction de rotation, sur la surface antérieure de la plaque de fermeture (51), et que l'arête de coupe est suivie d'une surface inclinée vers le haut dans le sens de la distribution.

2. Mélangeur selon la revendication 1, dans lequel le racleur (61) formant la surface inclinée s'étend à l'intérieur d'une section conique (52) de la partie de chambre (50) qui s'élargit vers l'arrière.

3. Mélangeur selon l'une des revendications 1 ou 2, dans lequel les surfaces extérieures des tourillons tubulaires (58, 59) présentent une forme conique se rétrécissant vers l'arrière.

4. Mélangeur selon l'une des revendications 1 à 3, dans lequel la plaque de fermeture (51) peut être engagée par l'arrière dans un élément de bride (53) radial de la partie de chambre (50).

5. Mélangeur selon la revendication 4, dans lequel l'élément de bride (53) forme une surface (54) en saillie vers l'avant pour coopérer avec un élément de retenue (71) qui rattache le mélangeur (14) à des réservoirs de stockage (12, 13).
